# FASCICULE DE BREVET EUROPEEN

(11) **EP 1 659 314 B1**
(45) Date de publication et mention de la délivrance du brevet: **03.10.2007**
(21) Numéro de dépôt: 05300957.7
(22) Date de dépôt: 22.11.2005
(51) Int. Cl.: F16H 55/06, F16H 48/20, F16H 48/08

(54) **Différentiel avec pignon planétaire et satellite léger**
Differential mit leichten Planeten und Satelliten
Differential with light planetary pinion and satellite

(30) Priorité: 22.11.2004 FR 0452706
(43) Date de publication de la demande: 24.05.2006
(73) Titulaire: RENAULT S.A.S., 92100 Boulogne Billancourt (FR)
(72) Inventeur: Levant, Sébastien, 92500 Rueil Malmaison (FR)
(74) Mandataire: Rougemont, Bernard

(56) Documents cités:
- FR-A- 2 776 042
- US-A- 3 474 689
- US-A- 5 356 721
- US-A- 5 669 423
- US-B1- 6 343 418

## Description

La présente invention se rapporte à un différentiel de transmission notamment pour automobile comportant une couronne d'entrée de mouvement, solidaire en rotation d'un boîtier de différentiel, fermé par un couvercle, et renfermant deux planétaires de sortie coaxiaux entraînés par des satellites.

L'invention possède une application privilégiée mais non limitative sur les planétaires de sortie ou les satellites d'un différentiel de transmission.

Dans un boîtier de différentiel, notamment de type sphérique, des éléments de friction sont généralement utilisés pour faire une interface entre les pignons métalliques, souvent en acier et le boîtier qui peut être en fonte ou en aluminium. Aujourd'hui, les pignons internes d'un tel différentiel occupent l'ensemble du volume sphérique disponible, et les éléments de friction sont réduits à de minces coupelles.

La masse du différentiel peut être réduite en dimensionnant au plus juste le boîtier et la couronne de pont. Ceci est illustré, par exemple, par la publication FR 2 776 042, qui décrit un boîtier de différentiel de transmission pour véhicule comportant une partie latérale de forme cylindrique. Pour alléger le boîtier, cette partie latérale présente des évidements dégagés dans sa masse, et au moins un élément d'obturation de forme complémentaire ayant une masse volumique inférieure à celle du reste du boîtier et occupant le même volume que s'il ne présentait pas d'évidements. Selon cette publication, la coupelle présente entre le boîtier et les pignons est réalisée dans un matériau approprié pour réduire la friction.

Le document US 3 474 689 apparaît être l'état de la technique le plus proche. Ce document décrit un pignon planétaire ou satellite de transmission de couple de différentiel comportant une première partie de transmission du couple en matériau métallique et une seconde partie de remplissage. Un élément de friction en matériel allégé est attaché en forme d'anneau plat au tour de cette partie de remplissage.

Cependant, les mesures d'allègement proposées par cette publication limitent le couple transmissible par le différentiel.

La présente invention vise donc à alléger un différentiel sans limiter le couple transmissible.

Elle propose dans ce but que les pignons internes de transmission de couple du différentiel présentent une première partie, par exemple en acier, pour transmettre le couple et une seconde partie en matériau allégé pour remplir le volume du pignon.

Les pignons conformes à la revendication indépendante 1, peuvent être des planétaires de sortie ou des satellites.

De préférence, la partie de remplissage en matériau allégé est réalisée dans un matériau lui permettant de servir d'élément de friction avec le boîtier du différentiel tel que du polyamide.

Selon un mode de réalisation préférentiel, ledit matériau allégé, par exemple du polyamide, peut être alvéolé ou poreux et son insertion peut être réalisée par injection.

Dans un mode de réalisation non limitatif de l'invention, la partie en matériau allégé peut être maintenue solidaire de la partie métallique par clipsage ou par collage.

En outre, conformément à l'invention, la rotation entre les deux parties du pignon est empêchée par des ergots. Ces derniers sont, par exemple, des plots sphériques s'emboîtant dans une contre forme sphérique.

Enfin, l'invention porte aussi sur un différentiel comportant au moins un tel pignon interne, comme revendiqué dans la revendication indépendante 10.

D'autres caractéristiques et avantages de l'invention apparaîtront à la lecture de la description détaillée qui suit pour la compréhension de laquelle on se reportera aux dessins annexés dans lesquels :
- la figure 1 est une vue extérieure de profil d'un pignon planétaire de différentiel selon l'invention ;
- la figure 2 est une coupe suivant la ligne I-I de la figure 1 ; et
- La figure 3 est un agrandissement partiel de la figure 2.

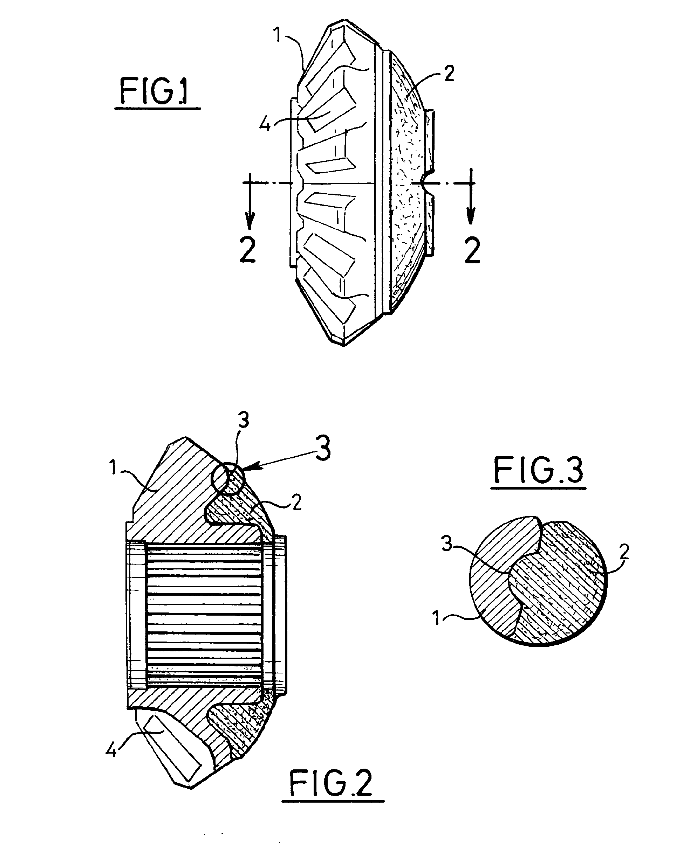

Classiquement, un mécanisme de différentiel comporte quatre pignons au minimum : deux planétaires et deux satellites. A titre d'exemple, les figures 1 à 3 représentent un planétaire de sortie de différentiel.

La figure 1 illustre la présence de dentures 4. Ces dentures sont, par exemple, en acier et leur mouvement est lié à celui des satellites (non représentés).

Sur la figure 2, on voit que le planétaire possède deux parties. Conformément à l'invention, la première partie 1, dite de transmission de couple, comprenant la denture 4, nécessaire pour transmettre le couple, est conçue, par exemple en acier, par forgeage. La seconde partie 2, dite de remplissage, est réalisée dans un matériau allégé.

Plus précisément, la partie 2 en matériau allégé sert non seulement de remplissage du pignon planétaire mais également d'élément de friction permettant ainsi de supprimer la coupelle qui servait classiquement d'élément de friction. En outre, les coûts de fabrication du nouveau pignon proposé sont équivalents à ceux de l'ensemble pignon/coupelle de l'état de la technique. En effet, géométriquement, le pignon planétaire allégé selon l'invention, possède des interfaces identiques à celles du pignon planétaire standard accompagné de sa coupelle.

Conformément à l'invention, le matériau de la partie de remplissage 2, par exemple, le polyamide plus ou moins chargé, peut être inséré par injection. Le matériau utilisé peut aussi dans sa partie interne être alvéolé ou poreux afin d'augmenter le gain en masse.

Dans l'exemple non limitatif de réalisation de l'invention illustré par la figure 2, le gain en masse peut être d'environ 20% par pignon. Ainsi, si la masse moyenne du mécanisme est de 850 grammes, le gain en acier pourra être de 170 grammes par véhicule.

La partie 2 en matériau allégé peut être maintenue solidaire de la partie 1 en acier par clipsage ou par collage en tenant compte que l'interface acier/plastique est laissée brute de forge.

Comme illustré sur la figure 3, des ergots 3 empêchent la rotation relative entre la partie 1 métallique et la partie 2 en matériau allégé. On peut ainsi exécuter en une seule opération l'assemblage de ces deux parties. De façon non limitative, l'anti-rotation entre les parties 1 et 2 du pignon interne est réalisée par des plots sphériques appartenant à la partie 2 s'emboîtant dans une contre forme sphérique de la partie 1.

Bien évidemment, toutes les caractéristiques décrites précédemment pour le planétaire de différentiel peuvent s'appliquer sans réserve aux satellites et présenter les mêmes avantages.

Ainsi, grâce à l'invention, tout différentiel de transmission, comportant au moins un pignon interne, planétaire ou satellite tel que décrit ci-dessus, peut être allégé sans réduction du couple transmissible.

## Revendications

1. Pignon planétaire ou satellite de transmission de couple de différentiel le pignon comporte une première partie de transmission du couple (1) en matériau métallique et est **caractérisé en ce qu'**il comporte une seconde partie de remplissage (2) en matériau allégé, qui sert d'élément de friction avec le boîtier de différentiel.

2. Pignon selon la revendication 1, **caractérisé en ce que** ledit matériau allégé de la seconde partie de remplissage (2) est alvéolé ou poreux.

3. Pignon selon la revendication 1 ou 2, **caractérisé en ce que** l'insertion du matériau allégé de la seconde partie de remplissage (2) est réalisé par injection.

4. Pignon selon la revendication 1, 2 ou 3, **caractérisé en ce que** la partie en matériau allégé (2) est maintenue solidaire de la partie métallique (1) par clipsage.

5. Pignon selon l'une quelconque des revendications précédentes, **caractérisé en ce que** la partie en matériau allégé (2) est maintenue solidaire de la partie métallique (1) par collage.

6. Pignon selon l'une quelconque des revendications précédentes, **caractérisé en ce que** la rotation entre les deux parties du pignon est empêchée par des ergots (3).

7. Pignon selon la revendication 6, **caractérisé en ce que** lesdits ergots (3) sont des plots sphériques s'emboîtant dans une contre forme sphérique.

8. Pignon selon l'une quelconque des revendications précédentes, **caractérisé en ce qu'**il s'agit d'un planétaire de sortie.

9. Pignon selon l'une quelconque des revendications précédentes, **caractérisé en ce qu'**il s'agit d'un satellite.

10. Différentiel de transmission notamment pour automobile comportant une couronne d'entrée de mouvement, solidaire en rotation d'un boîtier de différentiel, fermé par un couvercle, et renfermant des pignons internes dont deux pignons planétaires de sortie coaxiaux entraînés par des pignons satellites **caractérisé en ce que** au moins un pignon interne comporte une première partie de transmission du couple (1) métallique et une seconde partie de remplissage (2) en matériau allégé, qui sert d'élément de friction avec le boîtier de différentiel.

11. Différentiel de transmission selon la revendication 10, **caractérisé en ce que** ledit pignon interne en deux parties est un planétaire de sortie.

12. Différentiel de transmission selon la revendication 10 ou 11, **caractérisé en ce que** ledit pignon interne en deux parties est un satellite.

## Claims

1. Sun or planetary gear for transmitting differential torque, the gear comprising a first torque transmission portion (1) made of metal and being **characterized in that** it comprises a second filler portion (2) made of lightened material that serves as an element of friction with the differential carrier housing.

2. Gear according to Claim 1, **characterized in that** the said lightened material of the second filler portion (2) is honeycombed or porous.

3. Gear according to Claim 1 or 2, **characterized in that** the insertion of the lightened material of the second filler portion (2) is achieved by injection.

4. Gear according to Claim 1, 2 or 3, **characterized in that** the portion (2) made of lightened material is held fixedly attached to the metal portion (1) by clipping.

5. Gear according to any one of the preceding claims, **characterized in that** the portion (2) made of lightened material is held fixedly attached to the metal portion (1) by bonding.

6. Gear according to any one of the preceding claims, **characterized in that** the rotation between the two portions of the gear is prevented by lugs (3).

7. Gear according to Claim 6, **characterized in that** the said lugs (3) are spherical studs nesting in a spherical counter-shape.

8. Gear according to any one of the preceding claims, **characterized in that** it is an output sun gear.

9. Gear according to any one of the preceding claims, **characterized in that** it is a planetary gear.

10. Transmission differential particularly for a motor vehicle comprising a movement input crown wheel, fixedly attached in rotation to a differential carrier housing, closed by a cover, and containing internal gears including two coaxial output sun gears driven by planetary gears, **characterized in that** at least one internal gear comprises a first torque transmission portion (1) made of metal and a second filler portion (2) made of lightened material, which serves as an element of friction with the differential carrier housing.

11. Transmission differential according to Claim 10, **characterized in that** the said two-part internal gear is an output sun gear.

12. Transmission differential according to Claim 10 or 11, **characterized in that** the said internal two-part gear is a planetary gear.

## Patentansprüche

1. Planeten- oder Satellitenrad zur Drehmomentübertragung eines Differentialgetriebes, wobei das Zahnrad ein erstes Drehmomentübertragungsteil (1) aus metallischem Werkstoff aufweist und **dadurch gekennzeichnet ist, dass** es ein zweites Füllteil (2) aus Leichtwerkstoff aufweist, das als Reibungselement mit dem Differentialgehäuse dient.

2. Zahnrad nach Anspruch 1, **dadurch gekennzeichnet, dass** der Leichtwerkstoff des zweiten Füllteils (2) zellenförmig oder porös ist.

3. Zahnrad nach Anspruch 1 oder 2, **dadurch gekennzeichnet, dass** das Einfügen des Leichtwerkstoffs des zweiten Füllteils (2) durch Einspritzen erfolgt.

4. Zahnrad nach Anspruch 1, 2 oder 3, **dadurch gekennzeichnet, dass** das Teil aus Leichtwerkstoff (2) durch Schnappverbindung fest mit dem metallischen Teil (1) verbunden gehalten wird.

5. Zahnrad nach einem der vorhergehenden Ansprüche, **dadurch gekennzeichnet, dass** das Teil aus Leichtwerkstoff (2) durch Kleben fest mit dem metallischen Teil (1) verbunden gehalten wird.

6. Zahnrad nach einem der vorhergehenden Ansprüche, **dadurch gekennzeichnet, dass** die Drehung zwischen den beiden Teilen des Zahnrads von Nocken (3) verhindert wird.

7. Zahnrad nach Anspruch 6, **dadurch gekennzeichnet, dass** die Nocken (3) kugelförmige Klötzchen sind, die sich in eine kugelförmige Gegenform einfügen.

8. Zahnrad nach einem der vorhergehenden Ansprüche, **dadurch gekennzeichnet, dass** es sich um ein Ausgangs-Planetenrad handelt.

9. Zahnrad nach einem der vorhergehenden Ansprüche, **dadurch gekennzeichnet, dass** es sich um ein Satellitenrad handelt.

10. Getriebedifferential insbesondere für ein Kraftfahrzeug, das einen Bewegungseingangskranz aufweist, der drehfest mit einem Differentialgehäuse verbunden ist, das von einem Deckel verschlossen wird und innere Zahnräder umschließt, darunter zwei koaxiale Ausgangs-Planetenräder, die von Satellitenrädern angetrieben werden, **dadurch gekennzeichnet, dass** mindestens ein inneres Zahnrad ein erstes metallisches Drehmomentübertragungsteil (1) und ein zweites Füllteil (2) aus Leichtwerkstoff aufweist, das als Reibungselement mit dem Differentialgehäuse dient.

11. Übertragungsdifferential nach Anspruch 10, **dadurch gekennzeichnet, dass** das zweiteilige innere Zahnrad ein Ausgangs-Planetenrad ist.

12. Übertragungsdifferential nach Anspruch 10 oder 11, **dadurch gekennzeichnet, dass** das zweiteilige innere Zahnrad ein Satellitenrad ist.
